# EUROPEAN PATENT APPLICATION

(11) **EP 2 224 324 A1**
(43) Date of publication of application: **01.09.2010**
(21) Application number: 09154062.5
(22) Date of filing: 27.02.2009
(51) Int. Cl.: G06F 3/048, H04M 1/725, G06Q 10/00

(54) **Method for providing a notification on a portable electronic device**

(71) Applicant: RESEARCH IN MOTION LIMITED, Waterloo, Ontario N2L 3W8 (CA)
(72) Inventor: Vuong, Thanh Vinh, Waterloo Ontario N2L 3L3 (CA); Lazaridis, Mihal, Waterloo Ontario N2L 3W8 (CA)
(74) Representative: MERH-IP Matias Erny Reichl Hoffmann

(57) **Abstract**

A method for providing a notification on a portable electronic device includes: providing an application for managing events that is associated with an icon and executable by a processor and rendering a visually modified icon corresponding to said icon for display on a display screen of the portable electronic device in response to occurrence of a new event. The visually modified icon includes a counter for indicating a number of new events and when the number of new events is zero, the processor of the portable electronic device fails to render the visually modified icon for display on the display screen.

## Description

### Technical Field

The present disclosure relates to portable electronic devices and methods for providing notifications.

### Background

Portable electronic devices including cell phones, personal digital assistants (PDAs) and handheld computers include many different applications that are stored on and executable by the devices. Examples of applications include: instant messaging, text messaging, email, calendar, address book, games and music player applications. Typically, each application is represented by an icon that is displayed on a home screen of the device. In addition to application icons, a portion of the home screen is provided for display of a battery status indicator, time and date information and a signal reception status indicator. Because the screen size of most portable electronic devices is small, device home screens often appear cluttered. The cluttered appearance makes it difficult for a user to locate and select an application quickly.

Some applications generate notifications in response to an event such as an incoming text message, an incoming email, or an upcoming calendar event, for example. Notifications are often indicated by a change in the appearance of the icon that is associated therewith. When the home screen is cluttered, a user may not notice that a notification has been generated. As a result, the user may not read an important email message or may not be reminded of an appointment in time.

One solution for de-cluttering the appearance of a home screen is to provide folders. By opening a folder, the user may view the application icons that are stored in the folder as well as application icons that are stored in sub-folders. Although this solution may reduce the cluttered appearance of the user's home screen, the user is tasked with remembering where each application has been stored. It is therefore desirable to provide another solution to de-clutter the appearance of a home screen of a portable electronic device.

### Summary

In a first aspect, there is provided a method for providing a notification on a portable electronic device, the method including: providing an application for managing events, the application being executable by a processor of the portable electronic device and being associated with an icon; and rendering a visually modified icon corresponding to the icon for display on a display screen of the portable electronic device in response to occurrence of a new event, the visually modified icon including a counter for indicating a number of new events; wherein when the number of new events is zero, the processor of the portable electronic device fails to render the visually modified icon for display on the display screen.

In another aspect, there is provided a portable electronic device (10) comprising: a processor (14); a memory (18) in communication with said processor (14); and a display screen (20); the memory (18) being suitable for storing an application for managing events, said application being executable by said processor (14) to cause the processor (14) to implement the method of the first aspect.

In another aspect, there is provided a method for providing a notification on a portable electronic device including: providing an application for managing events, the application being executable by a processor of the portable electronic device and being associated with an icon; providing a display screen, the display screen including an application portion for displaying a visually modified icon corresponding to the icon; and rendering the visually modified icon for display on the application portion of the display screen of the portable electronic device in response to occurrence of a new event, the visually modified icon including a counter for indicating a number of new events; wherein when the number of new events is zero, the application portion of the display screen is empty.

### Drawings

The following figures set forth embodiments in which like reference numerals denote like parts. Embodiments are illustrated by way of example and not by way of limitation in the accompanying figures.

Figure 1 is a block diagram of a portable electronic device according to an embodiment;

Figure 2 is a front view of the portable electronic device of Figure 1;

Figure 3 is a view of a display screen of the portable electronic device of Figure 1 showing a home screen;

Figure 4 is a view of a display screen of the portable electronic device of Figure 1 showing visually modified icons on the home screen;

Figure 5 is a view of a display screen of the portable electronic device of Figure 1 showing a secondary screen;

Figure 6 is a state diagram for the portable electronic device of Figure 1; and

Figure 7 is a flow chart showing a method for providing a notification according to an embodiment.

### Description of the Preferred Embodiments

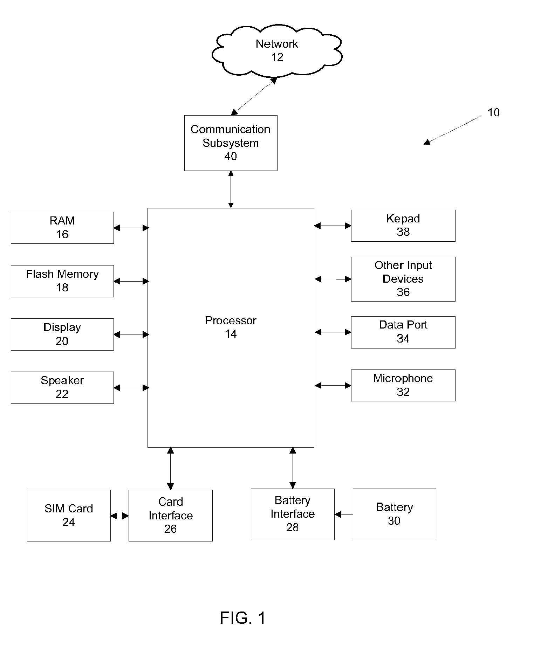

Referring now to Figure 1, components of a portable electronic device 10 according to an embodiment are generally shown. The portable electronic device 10 includes data communication capabilities and may communicate with other electronic devices directly or through a wireless network. The portable electronic device 10 is based on the computing environment and functionality of a handheld computer, such as a wireless personal digital assistant (PDA), for example. It will be understood, however, that the portable electronic device 10 is not limited to a wireless personal digital assistant. Other portable electronic devices are possible, such as cellular telephones, smart telephones, electronic messaging devices and laptop computers.

The portable electronic device 10 includes a number of components including processor 14, which controls the overall operation of the device 10. A communication subsystem 40 controls data and voice communication functions, such as email, PIN (Personal Identification Number) message functions, SMS (Short Message Service) message functions and cellular telephone functions, for example. The communication subsystem 40 is in communication with a wireless network 12, which may be a data-centric wireless network, a voice-centric wireless network or a dual-mode wireless network.

In Figure 1, the communication subsystem 40 is a dual-mode wireless network that supports both voice and data communications. The communication subsystem 40 is configured in accordance with the Global System for Mobile Communication (GSM) and General Packet Radio Services (GPRS) standards. The communication subsystem 40 may alternatively be configured in accordance with Enhanced Data GSM Environment (EDGE) or Universal Mobile Telecommunications Service (UMTS) standards. Other wireless networks may also be associated with the portable electronic device 10, including Code Division Multiple Access (CDMA) or CDMA2000 networks. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The wireless network 12 includes base stations (not shown) that provide a wireless link to the portable electronic device 10. Each base station defines a coverage area, or cell, within which communications between the base station and the portable electronic device 10 can be effected. It will be appreciated that the portable electronic device 10 is movable within the cell and can be moved to coverage areas defined by other cells. Data is delivered to the portable electronic device 10 via wireless transmission from base station. Similarly, data is sent from the portable electronic device 10 via wireless transmission to the base station.

The communication subsystem 40 further includes a short range communications function, which enables the device 10 to communicate directly with other devices and computer systems without the use of the network 106 through infrared or Bluetooth™ technology, for example.

Prior to the portable electronic device 10 being able to send and receive communication signals over the wireless network 12, network registration or activation procedures must have been completed. In order to enable network communication, a SIM (Subscriber Identity Module) card 24 is inserted into a card interface 26. The SIM card, or Removable User Identity Module card, is used to identify the user of the mobile device, store personal device settings and enable access to network services, such as email and voice mail, for example, and is not bound to a particular portable electronic device 10.

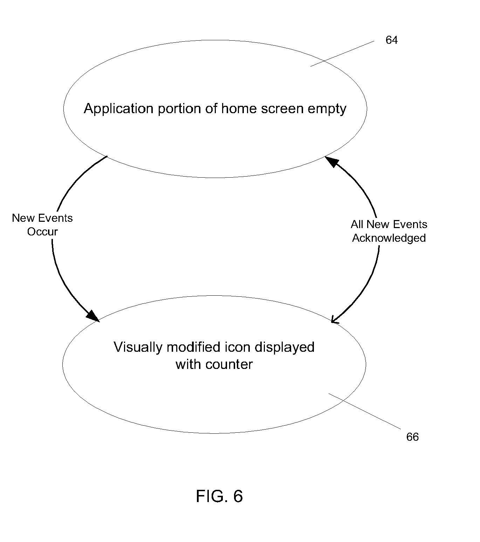

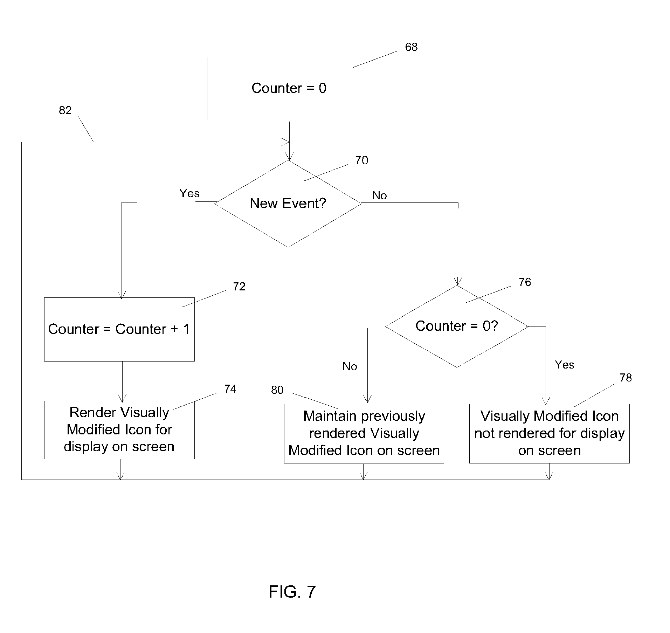

The processor 14 is also connected to a Random Access Memory (RAM) 16 and a flash memory 18. An operating system and device software are typically stored in flash memory 18 and are executable by the processor 14. Some device software components may alternatively be stored in RAM 16. The operating system includes a notification handling module for handling new and existing notifications according to a method for providing a notification on a portable electronic device, which will be described further in reference to Figures 6 and 7. The notification module may, alternatively, be provided as part of the device software.

The portable electronic device 10 includes computer executable programmed instructions for directing the portable electronic device to implement various applications. Some examples of applications that may be stored on and executed by the device 10 include: electronic messaging, games, calendar, address book and music player applications. Software applications that control basic device operation, such as voice and data communication, are typically installed during manufacture of the device 10. For devices that do not include a SIM card 24, user identification information may be programmed into the flash memory 18. The flash memory 18 may alternatively be a persistent storage, a Read-Only Memory (ROM) or other non-volatile storage.

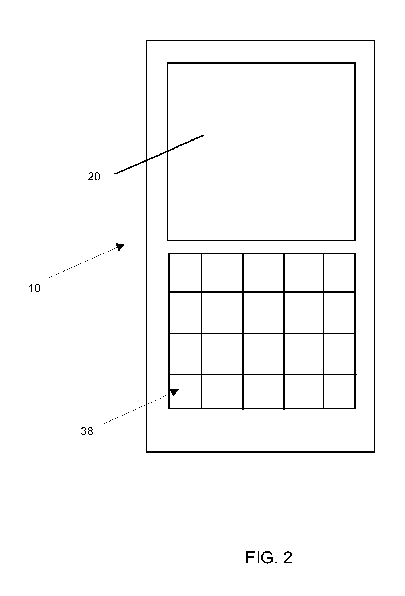

Referring also to Figure 2, the processor 14 receives input from various input devices including a keypad 38 and other input devices 36. The keypad 38 may be a complete alphanumeric keypad or telephone-type keypad. The other input devices 36 may replace or complement the keypad 38 to facilitate input and may include devices such as: single or multi-function buttons, a touch screen, a mouse, a trackball, a capacitive touch sensor or a roller wheel with dynamic button pressing capability. The portable electronic device 10 of Figure 2 is shown by way of example and it will be appreciated by a person skilled in the art that many different shapes and input device configurations are possible.

The processor 14 outputs to various output devices including an LCD display screen 20. A microphone 32 and speaker 22 are connected to the processor 14 for cellular telephone functions. A data port 34 is connected to the processor 14 for enabling data communication between the portable electronic device 10 and another computing device. The data port 34 may include data lines for data transfer and a supply line for charging a battery 30 of the portable device 10. Battery interface 28 is provided for receiving one or more rechargeable batteries 30.

The portable electronic device 10 is operable in a data communication mode and a voice communication mode. In the data communication mode, a received data signal representing information such as a text message, an email message, a media file to be transferred, or web page download is processed by the communication subsystem 40 and input to the processor 14. The processor 14 further processes the signal and renders images for display on the display screen 20. Alternatively, the processed signals may be output to another computing device through the data port 34. In order to transmit information in the data communication mode, the user of the portable electronic device 10 composes information for transmission, such as email messages, for example, using the keypad 38 and other input devices 36 in conjunction with the display screen 20. The composed information is transmitted through the communication subsystem 40 over the wireless network 12 or via short range communications. Operation of the portable electronic device 10 in the voice communication mode is similar to the data communication mode, however, the received signals are output to the speaker 22, or an auxiliary device such as a headset or headphones, and signals for transmission are generated by the microphone 32. The portable electronic device 10 may also include other voice subsystems, such as a voice message recording subsystem, for example.

Only a limited number of device subsystems have been described. It will be appreciated by a person skilled in the art that additional subsystems corresponding to additional device features may also be connected to the processor 14.

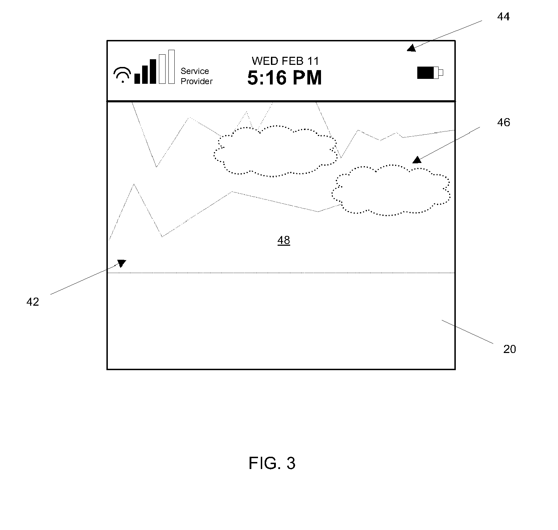

Referring to Figure 3, a home screen 42 is shown on the display screen 20 of the portable electronic device 10. The home screen 42 is the default screen that appears when the portable electronic device 10 is turned on and the home screen 42 is typically displayed during regular operation of the device 10. The home screen 42 is divided into two portions: a status portion 44 and an application portion 46. A background image 48 is displayed on the screen 20 and provides a backdrop to the status portion 44 and the application portion 46, which appear on top of the background image 48. The background image 48 may be blank or may be a default image that is provided by the manufacturer of the portable electronic device 10. Alternatively, the background image 48 may be a personalized image that has been saved to the device 10 by the user.

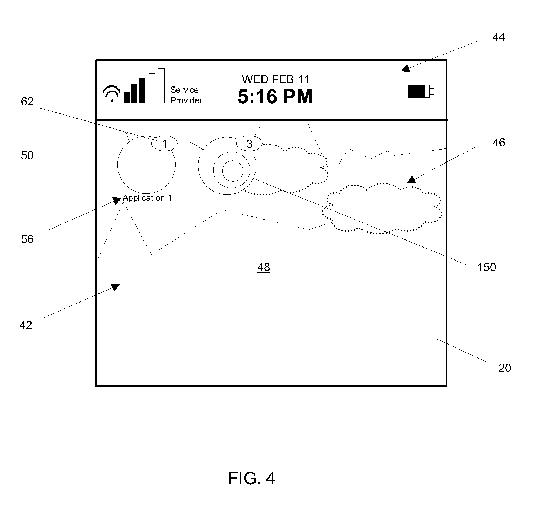

The status portion 44 of the home screen 42 displays status information including time, date, battery and signal strength and the name of the service provider of the wireless network on which the portable electronic device 10 is currently operating. The application portion 46 selectively displays visually modified icons 50, which are associated with applications for managing events that are stored on the portable electronic device 10. Referring to Figure 4, examples of visually modified icons 50 are schematically shown. Applications for managing events include any application that generates a notification requiring user action. Some examples of applications for managing events include: text messaging applications, e-mail applications, calendar applications, gaming applications, telephone or voice applications, voice messaging applications and task applications.

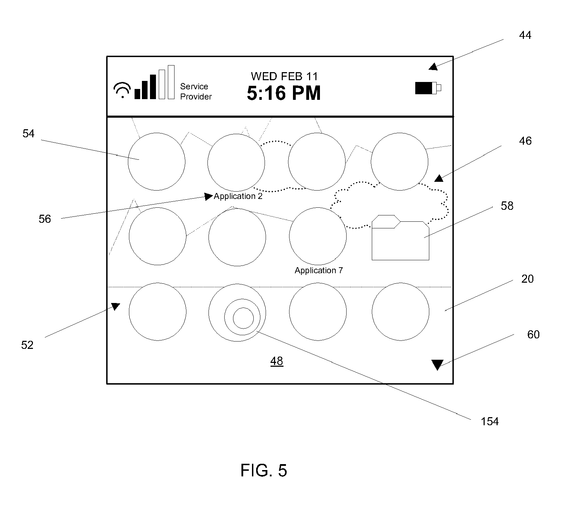

A secondary screen 52 is shown in Figure 5. The secondary screen 52 is displayed in response to user actuation of a button, or other input device, that functions to switch from the home screen 42 to the secondary screen 52. The secondary screen 52 is similar to the home screen 42, however, the application portion 46 is populated with a plurality of icons 54. Each icon 54 represents a software application that is stored on the portable electronic device 10 and is executable by the processor 14. In general, the icons 54 are easily recognizable images that are associated with respective software applications. Some icons 54 include an application name 56. The secondary screen 52 may also include folders 58 that contain additional software application icons and sub-folders. The folders 58 are typically user-generated to visually organize the software applications by application type, frequency of use or other categorization. The display screen 20 includes many different icons 54 and folders 58. By scrolling, in the direction indicated by arrow 60, the user is able to view additional icons 54. As shown, the large number of icons 54 on the secondary screen 52 almost entirely obscures the background image 48.

Referring back to Figures 3 and 4, each visually modified icon 50 includes a counter 62. The counter 62 keeps a tally of the number of notifications that are currently pending acknowledgement in the associated application. The counter 62 displays a number that is equal to or greater than one. If there are no notifications associated with an application, neither the icon 54 or the visually modified icon 50 of the application is displayed on the home screen 42.

Notifications indicate new events that have occurred in an application. It will be appreciated by a person skilled in the art that new events include any event that has not been acknowledged by the user. New events are not limited to occurring within a particular time frame. Some examples of new events include: an incoming text message, an incoming email, an upcoming calendar event, a task deadline, an opponent's move in an on-line chess game or any other event that requires some action on the part of the user.

The method for acknowledging a new event varies based on the application with which the event is associated. For example, an incoming email message may be acknowledged by opening the message in the email application and an upcoming calendar event may be acknowledged by responding to a "cancel or delay reminder" query from the calendar application. Each time a new event is acknowledged, the counter 62 is decreased by one. The method for acknowledging a new event may alternatively be customized for each portable electronic device 10. In this embodiment, user setting options associated with each application would specify how each event is acknowledged. For example, a user who receives a large volume of email messages may open and read new email messages in order to determine if the messages are urgent and postpone taking action on non-urgent email messages. Such a user could choose to have email messages remain unacknowledged, and therefore included in the notification tally of the counter 62, until a reply to the email message has been sent, the message has been filed or the message has been deleted.

Each application includes an icon 54 and a corresponding visually modified icon 50. The icon 54 and visually modified icon 50 may be identical with the exception of the counter 62, or alternatively, may be slightly different. The icon 54 and visually modified icon 50 should be similar enough that the user is readily able to identify both icons 54, 50 as representing the same application. An example of an icon and corresponding visually modified icon pair is identified by reference numerals 154 and 150, respectively, in Figures 4 and 5.

In another embodiment, the visually modified icon 50 is an animated icon. The appearance of the visually modified icon 50 would be similar to the appearance of the corresponding icon 54 so that a user could easily recognize that both icons 50, 54 represent the same application, however, the icon 54 would be a static icon and the visually modified icon 50 would be animated. For example, in a text messaging application, the visually modified icon 50 may include an envelope that waves back and forth to indicate that new text messages are present in the application. In another example, the visually modified icon 50 may include a telephone handset that moves into and out of its cradle to indicate that voice messages are present in the application.

A method for providing a notification on a portable electronic device 10 includes: providing an application for managing events that is associated with an icon 54 and is executable by the processor 14 of the portable electronic device 10, rendering a visually modified icon 50 corresponding to the icon 54 for display on the screen 20 of the portable electronic device 10 in response to occurrence of a new event, the visually modified icon 50 including a counter 62 for indicating a number of new events and wherein when the number of new events is zero, the processor 14 of the portable electronic device 10 fails to render the visually modified icon 50 for display on the screen 20.

The method for providing a notification on a portable electronic device 10 will now be further described with reference to Figures 6 and 7. Referring to Figure 6, the application portion 46 of the home screen 42 is empty until one or more new events are detected by the processor 14, as indicated by reference numeral 64. When new events are detected, the visually modified icon 50 is displayed with the counter 62, which indicates the number of new events, as indicated by reference numeral 66. When all of the new events have been acknowledged, the visually modified icon 50 is no longer displayed and the application portion 46 of the home screen 42 is empty.

Steps for implementing the method for providing a notification on a portable electronic device according to an embodiment are shown in Figure 7. Initially, the counter 62 is set to zero and the application portion 46 of the home screen 42 is empty, as indicated at step 68. At step 70, a new event is detected by the processor 14 and the counter is increased by one, as indicated at step 72. The visually modified icon 50 is then displayed, as indicated at step 74. Returning to step 70, when no new event is detected, the processor 14 determines if the counter is equal to zero, as indicated at step 76. If the counter is equal to zero, the visually modified icon 50 is not rendered for display, as indicated at step 78, and the application portion 46 of the home screen 42 remains empty. If the counter is not equal to zero, the previously rendered visually modified icon 50 is maintained on the screen, as indicated at step 80. The processor 14 then waits for the next new event to occur, as indicated by loop 82.

One advantage of the portable electronic device and method disclosed herein is that by only showing the user applications that require the user to take an action, the user is able to work more effectively and is more likely to respond to email messages and accomplish tasks in a timely manner. In addition, a user is less likely to miss an important event, such as a meeting.

Another advantage of the portable electronic device and method disclosed herein is that device users who employ folders and sub-folders to organize their application icons do not have to navigate through multiple screens in order to determine if a new event has occurred in an application.

Yet another advantage of the portable electronic device and method disclosed herein is that the background image 48 is generally un-obscured during regular operation of the device 10. Rather than looking at a mass of icons, the user would be able to look at their favorite picture. Alternatively, the image may be a default image selected by the manufacturer of the device that functions to advertise other devices or products available from the same manufacturer or other associated manufacturers.

Specific embodiments have been shown and described herein. However, modifications and variations may occur to those skilled in the art. All such modifications and variations are believed to be within the scope and sphere of the present embodiments.

## Claims

1. A method for providing a notification on a portable electronic device (10), said method comprising:
providing an application for managing events, said application being executable by a processor (14) of said portable electronic device (10) and being associated with an icon (54); and
rendering a visually modified icon (50) corresponding to said icon (54) for display on a display screen (20) of said portable electronic device (10) in response to occurrence of a new event, said visually modified icon (50) including a counter (62) for indicating a number of new events;
wherein when said number of new events is zero, said processor (14) of said portable electronic device (10) fails to render said visually modified icon (50) for display on said display screen (20).

2. A method for providing a notification on a portable electronic device (10), said method comprising:
providing an application for managing events, said application being executable by a processor (14) of said portable electronic device (10) and being associated with an icon (54);
providing a display screen (20), said display screen (20) including an application portion (46) for displaying a visually modified icon (50) corresponding to said icon (54);
rendering said visually modified icon (50) for display on said application portion (46) of said display screen (20) of said portable electronic device (10) in response to occurrence of a new event, said visually modified icon (50) including a counter (62) for indicating a number of new events;
wherein when said number of new events is zero, said application portion (46) of said display screen (20) is empty.

3. A method as claimed in claim 1 or claim 2, wherein a type of said application for managing events is selected from the group consisting of: electronic messaging, voice messaging, gaming, task and calendaring.

4. A method as claimed in any of the preceding claims, wherein said number of new events is increased by one when another new event is detected by said processor (14).

5. A method as claimed in any of the preceding claims, wherein said number of new events is decreased by one when one of said new events is acknowledged.

6. A method as claimed in claim 5, wherein said new events are acknowledged by opening said new events in said application.

7. A method as claimed in any of the preceding claims, wherein a plurality of visually modified icons (50) are rendered for display in response to the occurrence of new events in a plurality of applications for managing events.

8. A computer-readable medium comprising instructions executable on a processor (14) to cause the processor (14) to implement the method of any of the preceding claims.

9. A computer program comprising instructions executable on a processor (14) to cause the processor (14) to implement the method of any of the preceding claims.

10. A portable electronic device (10) comprising:
a processor (14); a memory (18) in communication with said processor (14); and a display screen (20);
the memory (18) being suitable for storing an application for managing events, said application being executable by said processor (14) to cause the processor (14) to implement the method of any of claims 1 to 7.

## Amended claims

### Amended claims in accordance with Rule 137(2) EPC.

**1.** A method for providing a notification on a portable electronic device (10), said method comprising:
providing an application for managing events, said application being executable by a processor (14) of said portable electronic device (10) and being represented by an icon (54);
rendering a home screen (42) for display on a display screen (20) of said portable electronic device (10), said home screen (42) including an application portion (46) and a status portion (44); and
rendering a visually modified icon (50) corresponding to said icon (54) for display on said application portion (46) of said display screen (20) in response to occurrence of a new event, said visually modified icon (50) including a counter (62) for indicating a number of new events;
wherein when said number of new events is zero, said processor (14) of said portable electronic device (10) fails to render said visually modified icon (50) for display on said application portion of said display screen (20).

**2.** A method as claimed in claim 1, comprising:
providing a plurality of applications for managing events;
wherein when said number of new events of each of said plurality of applications is zero, said application portion (46) of said display screen (20) is empty.

**3.** A method as claimed in claim 1 or claim 2, wherein a type of said application for managing events is selected from the group consisting of: electronic messaging, voice messaging, gaming, task and calendaring.

**4.** A method as claimed in any of the preceding claims, wherein said number of new events is increased by one when another new event is detected by said processor (14).

**5.** A method as claimed in any of the preceding claims, wherein said number of new events is decreased by one when one of said new events is acknowledged.

**6.** A method as claimed in claim 5, wherein said new events are acknowledged by use of said icon (54) to open said new events in said application.

**7.** A method as claimed in any of the preceding claims, wherein a plurality of visually modified icons (50) are rendered for display in response to the occurrence of new events in a plurality of applications for managing events.

**8.** A method as claimed in any of claims 1-7, wherein a secondary screen (52) is rendered for display on said display screen (20) in response to user actuation of an input device to switch from said home screen (42) to said secondary screen (52), said secondary screen (52) for displaying a plurality of icons (54).

**9.** A computer-readable medium comprising instructions executable on a processor (14) to cause the processor (14) to implement the method of any of the preceding claims.

**10.** A computer program comprising instructions executable on a processor (14) to cause the processor (14) to implement the method of any of claims 1 to 8.

**11.** A portable electronic device (10) comprising:
a processor (14); a memory (18) in communication with said processor (14); and a display screen (20);
the memory (18) being suitable for storing an application for managing events, said application being executable by said processor (14) to cause the processor (14) to implement the method of any of claims 1 to 8.
